# EUROPEAN PATENT APPLICATION

(11) **EP 4 559 943 A1**
(43) Date of publication of application: **28.05.2025**
(21) Application number: 23842933.6
(22) Date of filing: 14.07.2023
(51) Int. Cl.: C08F 214/26, C08J 9/00, B29C 67/20

(54) **MODIFIED POLYTETRAFLUOROETHYLENE, MOLDED ARTICLE, AND STRETCHED POROUS BODY PRODUCTION METHOD**

(30) Priority: 19.07.2022 JP 2022114814
(71) Applicant: AGC INC., Chiyoda-ku, Tokyo 1008405 (JP)
(72) Inventor: EBATA Shiro, Tokyo 100-8405 (JP); HIGUCHI Shinya, Tokyo 100-8405 (JP); ABE Kaori, Tokyo 100-8405 (JP); TAGUCHI Daisuke, Tokyo 100-8405 (JP); KOSE Takehiro, Tokyo 100-8405 (JP)
(74) Representative: Müller-Boré & Partner Patentanwälte PartG mbB
(86) International application number: PCT/JP2023/026055
(87) International publication number: WO 2024/019010

(57) **Abstract**

To provide a modified polytetrafluoroethylene with which a stretched porous body excellent in breaking strength can be produced, a molded product, and a method for producing a stretched porous body.

The modified polytetrafluoroethylene of the present invention has units based on tetrafluoroethylene and units based on at least one monomer selected from a perfluoro(alkyl vinyl ether), hexafluoropropylene and a fluoroalkylethylene, wherein the thermal instability index is 0 to 15 and the area ratio S calculated by a predetermined method is 0.70 or less.

## Description

### TECHNICAL FIELD

The present invention relates to a modified polytetrafluoroethylene, a molded product, and a method for producing a stretched porous body.

### BACKGROUND ART

Polytetrafluoroethylenes have been used for various applications due to their excellent properties.

Particularly, various studies have been made on a modified polytetrafluoroethylene obtained by polymerizing tetrafluoroethylene and a perfluoroalkylethylene (Patent Documents 1 and 2).

### PRIOR ART DOCUMENTS

### PATENT DOCUMENTS

Patent Document 1: WO2017/030094
Patent Document 2: Japanese Patent No. 4031433

### DISCLOSURE OF INVENTION

### TECHNICAL PROBLEM

In recent years, further improvements in the performance of modified polytetrafluoroethylenes have been required.

The present inventors have studied on a stretched porous body obtained by using the modified polytetrafluoroethylene as described in Patent Document 1 or 2 and as a result found that their breaking strength can still be improved.

An object of the present invention is to provide a modified polytetrafluoroethylene with which a stretched porous body excellent in breaking strength can be produced.

Another object of the present invention is to provide a molded product and a method for producing a stretched porous body.

### SOLUTION TO PROBLEM

The present inventors have conducted extensive studies to achieve the above object and as a result found that the above objects can be achieved by the following construction.

That is, the present inventors have found that the above objects can be achieved by the following construction.
[1] A modified polytetrafluoroethylene having units based on tetrafluoroethylene and units based on the following another monomer copolymerizable with tetrafluoroethylene,
   wherein the thermal instability index is 0 to 15, and
   the area ratio S calculated by the following method is 0.70 or less;
   another monomer: at least one member selected from a perfluoro(alkyl vinyl ether), hexafluoropropylene and a fluoroalkylethylene;
   area ratio S calculation method:
      second derivative is taken of a differential thermal analysis curve measured with respect to the modified polytetrafluoroethylene that has not been heated to 300°C or higher, by a differential scanning calorimeter at a temperature-increasing rate of 1°C/min, to obtain a second derivative curve;
      in the second derivative curve, a local minimum value Mi1 is present in a range of 19 to 21°C, and, an area S1 of a region surrounded by a straight line connecting a point L21 indicating a local maximum value positioned on the lowest temperature side among local maximum values positioned on the higher temperature side than a temperature indicating the local minimum value Mi1, and a point L22 indicating a local maximum value positioned on the highest temperature side among local maximum values positioned on the lower temperature side than the temperature indicating the local minimum value Mi1, and by the second derivative curve, is obtained,
      in the second derivative curve, a local minimum value Mi2 is present in a range of 15 to 17°C, and, an area S2 of a region surrounded by a straight line connecting a point L23 indicating a local maximum value positioned on the lowest temperature side among local maximum values positioned on the higher temperature side than a temperature indicating the local minimum value Mi2, and a point L24 indicating a local maximum value positioned on the highest temperature side among local maximum values positioned on the lower temperature side than the temperature indicating the local minimum value Mi2, and by the second derivative curve, is obtained, and
      a ratio of the area S1 to the area S2 is taken as the area ratio S.
[2] The modified polytetrafluoroethylene according to [1], wherein the another monomer is a fluoroalkylethylene.
[3] The modified polytetrafluoroethylene according to [1], wherein the another monomer is CH₂=CH(CF₂)₄F.
[4] The modified polytetrafluoroethylene according to any one of [1] to [3], wherein a standard specific gravity of the modified tetrafluoroethylene is 2.130 to 2.160.
[5] The modified polytetrafluoroethylene according to [1] or [2], wherein a content ratio of units based on the another monomer in the modified polytetrafluoroethylene is 1000 to 6000 mass ppm to a total content of all monomer-based units in the modified polytetrafluoroethylene.
[6] The modified polytetrafluoroethylene according to [3], wherein a content ratio of the units based on CH₂=CH(CF₂)₄F in the modified polytetrafluoroethylene is 1500 to 6000 mass ppm to a total content of all monomer-based units in the modified polytetrafluoroethylene.
[7] The modified polytetrafluoroethylene according to any one of [1] to [6], which is for paste extrusion.
[8] A molded product, formed by subjecting the modified polytetrafluoroethylene as defined in any one of [1] to [7] to paste extrusion.
[9] A method for producing an extrude porous body, which comprises subjecting the modified polytetrafluoroethylene as defined in any one of [1] to [7] to paste extrusion to obtain an extruded bead, and stretching the extruded bead to obtain a stretched porous body.

### ADVANTAGEOUS EFFECTS OF INVENTION

According to the present invention, it is possible to produce a modified polytetrafluoroethylene with which a stretched porous body excellent in breaking strength can be produced.

Further, according to the present invention, it is possible to produce a molded product using the above modified polytetrafluoroethylene, and a method for producing a stretched porous body.

### BRIEF DESCRIPTION OF DRAWINGS

Fig. 1 illustrates an example of a differential thermal analysis curve measured by using the modified polytetrafluoroethylene of the present invention.
Fig. 2 illustrates an example of a second derivative curve obtained by taking second derivative of a differential thermal analysis curve measured by using the modified polytetrafluoroethylene of the present invention.

### DESCRIPTION OF EMBODIMENTS

Meanings of terms in the present invention are as follows.

"Units" generically mean an atomic group derived from one molecule of a monomer, directly formed by polymerization of the monomer. The content (mol%) of each units based on all units which a polymer has, is obtained by analyzing the polymer by nuclear magnetic resonance spectroscopy (NMR), or can be estimated from the amount of charge of each monomer. Usually, the content of each units calculated from the amount of charge of each monomer, substantially agrees with the actual content of each units.
" to " used to show a range of numerical values is used to include numerical values before and after it as the lower limit value and the upper limit value. In numerical ranges described stepwise in this specification, the upper limit value or the lower limit value described in a certain numerical range may be replaced with an upper limit value or a lower limit value of another numerical range described stepwise. In the numerical described in this specification, the upper limit value or the lower limit value described in a certain numerical range may be replaced with values indicated in Examples.

In this specification, a combination of two or more preferred embodiments corresponds to a more preferred embodiment.

One of characteristics of the modified polytetrafluoroethylene of the present invention (hereinafter sometimes referred to as "modified PTFE") is that it has units based on tetrafluoroethylene (hereinafter sometimes referred to as "TFE") (hereinafter sometimes referred to as "TFE units") and units based on another monomer, and it has a thermal instability index of 0 to 15 and an area ratio S calculated by the method described later of 0.70 or less.

### <Modified PTFE>

The modified PTFE of the present invention has TFE units and units based on another monomer.

### (TFE units)

The modified PTFE usually has as the main component a polymer having TFE units. The "main component" means that the content of the polymer having TFE units is 99.000 mass% or more to the modified PTFE, and is preferably 99.400 mass% or more.

### (Units based on another monomer)

The another monomer is at least one member selected from a perfluoro(alkyl vinyl ether) (hereinafter sometimes referred to as "PAVE"), hexafluoropropylene (hereinafter sometimes referred to as "HFP") and a fluoroalkylethylene (hereinafter sometimes referred to as "FAE").

The another monomer is preferably FAE.

PAVE may be CF₂=CFOCF₃ (hereinafter sometimes referred to as "PMVE"), CF₂=CFOCF₂CF₃, CF₂=CFOCF₂CF₂CF₃ (hereinafter sometimes referred to as "PPVE"), CF₂=CFOCF₂CF₂CF₂CF₃ or CF₂=CFO(CF₂)₈F. Among them, PMVE or PPVE is preferred.

FAE may be CH₂=CH(CF₂)₂F, CH₂=CH(CF₂)₃F, CH₂=CH(CF₂)₄F, CH₂=CF(CF₂)₃H or CH₂=CF(CF₂)₄H. Among them, CH₂=CH(CF₂)₄F or CH₂=CH(CF₂)₂F is preferred, and particularly, CH₂=CH(CF₂)₄F (hereinafter sometimes referred to as "PFBE") is preferred.

The content of the units based on the another monomer in the modified PTFE is, to the total content of all monomer-based units in the modified PTFE, preferably 1000 mass ppm or more, more preferably 1500 mass ppm or more, further preferably 1700 mass ppm or more, particularly preferably 2000 mass ppm or more.

The content of the units based on the another monomer in the modified PTFE is, in view of more excellent heat resistance of the modified PTFE, to the total content of all monomer-based units in the modified PTFE, preferably 6000 mass ppm or less, more preferably 5500 mass ppm or less, further preferably 5000 mass ppm or less.

Hereinafter an explanation is made with reference to an example in which PFBE is used as the another monomer.

### (PFBE units)

The content ratio of the PFBE units in the modified PTFE is, in view of more excellent breaking strength of an obtainable stretched porous body, to the total content of all monomer-based units in the modified PTFE, preferably 1000 mass ppm or more, more preferably 1500 mass ppm or more, further preferably 1700 mass ppm or more, particularly preferably 2000 mass ppm or more.

The content ratio of the PFBE units in the modified PTFE is, in view of more excellent heat resistance of the modified PTFE, to the total content of all monomer-based units in the modified PTFE, 6000 mass ppm or less, more preferably 5500 mass ppm or less, further preferably 5000 mass ppm or less.

Further, the content ratio is also preferably 1000 mass ppm or more and 3000 mass ppm or less.

The modified PTFE may have units other than the TFE units and the PFBE units within a range not to impair the effects of the present invention.

The total content of the TFE units and the PFBE units is, to all units of the modified PTFE, 99.000 mass% or more, more preferably 99.200 mass% or more. The upper limit may be 100 mass%.

The thermal instability index (hereinafter sometimes referred to as "TII") of the modified PTFE is 0 to 15, and is preferably 0 to 13, more preferably 0 to 12.

TII is usually an index of heat resistance, and a lower TII means more excellent heat resistance, and as described later, it may be used as a parameter indicating dispersibility of the PFBE units in the modified PTFE.

TII of the modified PTFE is measured in accordance with ASTM D4895-04.

As a method of adjusting TII to be within the above range, a method of adjusting the amount of PFBE to be used at the time of production of the modified PTFE may be mentioned.

Further, as another method of adjusting TII to be within the above range, a method of shortening the time for kick-off of the reaction (described later) at the time of production of the modified PTFE may be mentioned.

The area ratio S of the modified PTFE, calculated by the following method, is 0.70 or less, and in view of more excellent breaking strength of the obtainable stretched porous body, preferably 0.65 or less, more preferably 0.60 or less. The lower limit of the area ratio S of the modified PTFE is 0.

The area ratio S calculation method is as follows.

A second derivative curve is obtained by taking second derivative of a differential thermal analysis curve measured with respect to a modified PTFE that has not been heated to 300°C or higher, by a differential scanning calorimeter at a temperature-increasing rate of 1 °C/min.

In the above second derivative curve, a local minimum value Mi1 is present in a range of 19 to 21°C, and, an area S1 of a region surrounded by a straight line connecting a point L21 indicating the local maximum value positioned on the lowest temperature side among local maximum values positioned on the higher temperature side than the temperature indicating the local minimum value Mi1, and a point L22 indicating the local maximum value positioned on the highest temperature side among local maximum values positioned on the lower temperature side than the temperature indicating the local minimum value Mi1, and by the second derivative curve, is obtained.

In the above second derivative curve, a local minimum value Mi2 is present in a range of 15 to 17°C, and, an area S2 of a region surrounded by a straight line connecting a point L23 indicating the local maximum value positioned on the lowest temperature side among local maximum values positioned on the higher temperature side than the temperature indicating the local minimum value Mi2, and a point L24 indicating the local maximum value positioned on the highest temperature side among local maximum values positioned on the lower temperature side than the temperature indicating the local minimum value Mi2, and by the second derivative curve, is obtained.

The ratio of the area S1 to the area S2 is taken as the area ratio S.

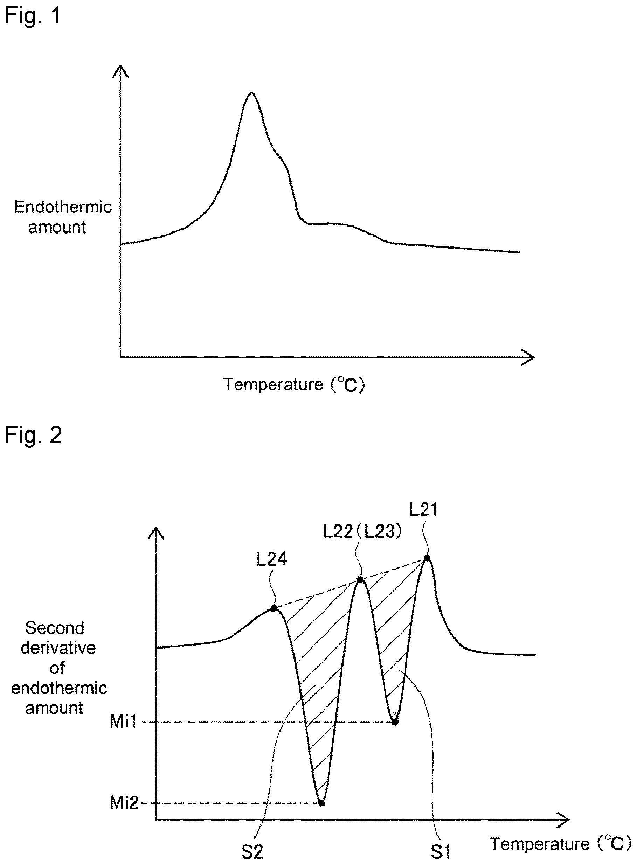

The area ratio S calculation method will be described in further reference with reference to Figs. 1 and 2.

Fig. 1 illustrates an example of a differential thermal analysis curve measured by using the modified PTFE of the present invention. Fig. 2 illustrates an example of a second derivative curve obtained by taking second derivative of a differential thermal analysis curve measured by using the modified PTFE of the present invention, and specifically illustrates a second derivative curve obtained by taking second derivative of the differential thermal analysis curve in Fig. 1.

As the measurement procedure, a modified PTFE (10 mg) that has not been heated to 300°C or higher, is held at a temperature of -20°C for 1 minute and heated to 60°C at a temperature-increasing rate of 1 °C/min, and a differential thermal analysis curve indicating the temperature on the horizontal axis and the endothermic amount per unit time on the vertical axis is obtained (see Fig. 1).

Then, second derivative of the obtained differential thermal analysis curve is taken to obtain a second derivative curve indicating the temperature on the horizontal axis and the second derivative of the endothermic amount per unit time on the vertical axis (see Fig. 2). In Fig. 2, the local minimum value Mi1 is a local minimum value present in a range of 19 to 21°C, and the local minimum value Mi2 is a local minimum value present in a range of 15 to 17°C.

In the obtained second derivative curve, an area S1 of a region surrounded by a straight line connecting a point L21 indicating the local maximum value positioned on the lowest temperature side among local maximum values positioned on the higher temperature side than the temperature indicating the local minimum value Mi1, and a point L22 indicating the local maximum value positioned on the highest temperature side among local maximum values positioned on the lower temperature side than the temperature indicating the local minimum value Mi1, and by the second derivative curve, is obtained.

And, in the second derivative curve, an area S2 of a region surrounded by a straight line connecting a point L23 indicating the local maximum value positioned on the lowest temperature side among local maximum values positioned on the higher temperature side than the temperature indicating the local minimum value Mi2, and a point L24 indicating the local maximum value positioned on the highest temperature side among local maximum values positioned on the lower temperature side than the temperature indicating the local minimum value Mi2, and by the second derivative curve, is obtained.

And, the ratio of the area S1 to the area S2, that is area S1/area S2, is taken as the area ratio S.

In the example of Fig. 2, between the temperature indicating the local minimum value Mi1 and the temperature indicating the local minimum value Mi2, only one local maximum value is present, and thus the point L22 and the point L23 are the same point. Whereas in a case where two or more local maximum values are present between the temperature indicating the local minimum value Mi1 and the temperature indicating the local minimum value Mi2, the point L22 and the point L23 are different points.

In the above calculation method, as the differential scanning calorimeter, DSC 8500 (manufactured by PerkinElmer), or an apparatus in accordance therewith is used. The second derivative curve of the differential thermal analysis curve, the area S1 and the area S2 are obtained by analysis software (Pyris Software, manufactured by PerkinElmer).

It is known that the differential thermal analysis curve obtained by using PTFE has three peaks in a range of -20 to 60°C.

The present inventors have found that positions and intensities of the above three peaks change by an increase of the amount of addition of PFBE at the time of production of the modified PTFE, particularly, the relation between two peaks on the low temperature side relates to breaking strength of the stretched porous body. Specifically, in order to further clarify the relation between the two peaks on the low temperature side, they have taken second derivative of the differential thermal analysis curve obtained by using the modified PTFE, calculated the area ratio S based on points corresponding to the two peaks on the low temperature side (the point indicating the local minimum value Mi1 and the point indicating the local minimum value Mi2 in Fig. 2), and derived a close relation of the value of the area ratio S to breaking strength of the stretched porous body.

To adjust the area ratio S to be within the above range, adjustment of the amount of PFBE used at the time of production of the modified PTFE may be mentioned.

The present inventors have found that when TII and the area ratio S of the modified PTFE satisfy the above values, breaking strength of the stretched porous body obtainable by using the modified PTFE will improve.

Here, as described above, TII is an index of heat resistance, and, the present inventors have found that TII is closely related also to the breaking strength of the stretched porous body obtainable by using the modified PTFE. More specifically, the value of TII relates to dispersibility of the PFBE units in the modified PTFE, and when the value of TII is low, the chain of the PFBE units in the modified PTFE tends to be short. Thus, TII of 15 or less substantially means that the chain of the PFBE units in the modified PTFE has a predetermined length or shorter, and in the modified PTFE which satisfies such a requirement, the chain of the PFBE units is short, the PFBE units are introduced as uniformly dispersed in the modified PTFE and as a result, a remarkable effect of improving the breaking strength is achieved.

The standard specific gravity (hereinafter sometimes referred to as "SSG") of the modified PTFE is preferably 2.130 to 2.160, more preferably 2.130 to 2.150, further preferably 2.130 to 2.142, still more preferably 2.130 to 2.141, more preferably 2.130 to 2.140, further preferably 2.130 to 2.139, particularly preferably 2.132 to 2.139, whereby the breaking strength of the stretched porous body can further be improved while preventing the extrusion pressure at the time of subjecting the modified PTFE to paste extrusion from becoming too high.

SSG is an index of the molecular weight, and a higher SSG means a lower molecular weight.

SSG may be adjusted by polymerization conditions when the modified PTFE is produced. For example, SSG can be decreased e.g. by increasing the polymerization pressure or lowering the polymerization temperature, or by adding PFBE prior to introduction of TFE, at the time of production of the modified PTFE (initial batch addition).

SSG of the modified PTFE is measured in accordance with ASTM D4895-04.

The shape of the modified PTFE is preferably particles in view of handling efficiency.

The average primary particle size of modified PTFE particles is preferably 0.10 µm or more, more preferably 0.11 µm or more, further preferably 0.13 µm or more, and is preferably 0.30 µm or less, more preferably 0.25 µm or less, further preferably 0.22 µm or less. When the average primary particle size is 0.10 µm or more, paste extrusion is possible under a low extrusion pressure, and a molded product excellent in surface smoothness, without surface waviness and the like is likely to be obtained. When the average primary particle size is 0.25 µm or less, voids between particles at the time of extrusion tend to be little and thus excellent extrusion stability will be achieved, and as a result a molded product excellent in surface smoothness is likely to be obtained.

The average primary particle size of the modified PTFE particles corresponds to D50 measured, for example, by a laser scattering particle size distribution analyzer (manufactured by HORIBA, Ltd., tradename "LA-960V2"). As described later, in a case where the modified PTFE is produced in an aqueous medium, the measurement is conducted by using the obtained aqueous dispersion (emulsion) of the modified PTFE particles to obtain the average primary particle size of the modified PTFE particles.

The extrusion pressure of the modified PTFE is preferably 17 to 27 MPa, more preferably 18 to 26 MPa, whereby the paste extrusion can readily be conducted.

The extrusion pressure is measured as follows.

A sample (modified PTFE) (100 g) which has been left to stand at room temperature for 2 hours or more, is put in a glass bottle having an internal capacity of 500 mL, and 21.7 g of a lubricating oil (ISOPAR H (registered trademark), manufactured by ExxonMobil) is added and mixed for 3 minutes to obtain a mixture. The obtained mixture is left to stand in a 25°C constant temperature chamber for 2 hours and then subjected to paste extrusion through an orifice with a diameter of 2.5 cm, a land length of 1.1 cm and an entrance angle of 30° with a reduction ratio (ratio of the cross sectional area of the inlet of the die to the cross sectional area of the outlet) of 100, at an extrusion rate of 51 cm/min at 25°C to obtain a paste-extruded bead (cord-shaped product). The pressure required for extrusion is measured and taken as the extrusion pressure (unit: MPa).

The breaking strength (hereinafter sometimes referred to as "breaking strength A") of the modified PTFE measured under the following conditions is preferably 44.7 N or more, more preferably 45.0 N or more. The breaking strength A of the modified PTFE is usually 80 N or less.

The breaking strength A is measured as follows.

An extruded bead is obtained in the same manner as the measurement of the extrusion pressure, which is dried at 230°C for 30 minutes to remove the lubricating oil. The extruded bead is cut into an appropriate length, both ends are fixed so that the distance between clamps is 5.1 cm, and the extruded bead is heated in an air-circulating oven at 300°C. The extruded bead is stretched at a stretch rate of 100 %/sec and a draw ratio of 2400% to obtain a modified PTFE stretched porous body A (hereinafter sometimes referred to as "stretched bead A").

Samples obtained from the both ends of the stretched bead A (necking in the clamp range is removed if any) and a sample obtained from the center part of the stretched bead, that is three samples, are used to measure the loads on tensile break using a tensile tester (manufactured by A&D Company, Limited), and the minimum value is taken as the breaking strength A.

In the measurement by the tensile tester, the sample is sandwiched and fixed by movable jaws with a gauge length of 5.0 cm, and the movable jaws are moved at a rate of 300 mm/min at room temperature (24°C) to impart a tensile stress.

The breaking strength (hereinafter sometimes referred to as "breaking strength B") of the modified PTFE measured under the following conditions is preferably 47.5 N or more, more preferably 48.0 N or more. The breaking strength B of the modified PTFE is usually 80 N or less.

The breaking strength B is measured as follows.

An extruded bead is obtained in the same manner as the measurement of the extrusion pressure, which is dried at 230°C for 30 minutes to remove the lubricating oil. The extruded bead is cut into an appropriate length, both ends are fixed so that the distance between clamps is 3.8 cm, and the extruded bead is heated in an air-circulating oven at 300°C. The extruded bead is stretched at a stretch rate of 1000 %/sec and a draw ratio of 2400% to obtain a modified PTFE stretched porous body B (hereinafter sometimes referred to as "stretched bead B").

Samples obtained from the both ends of the stretched bead B (necking in the clamp range is removed if any) and a sample obtained from the center part of the stretched bead, that is three samples, are used to measure the loads on tensile break using a tensile tester (manufactured by A&D Company, Limited), and the minimum value is taken as the breaking strength B.

In the measurement by the tensile tester, the sample is sandwiched and fixed by movable jaws with a gauge length of 5.0 cm, and the movable jaws are moved at a rate of 300 mm/min at room temperature (24°C) to impart a tensile stress.

### <Method for producing modified PTFE>

The method for producing the modified PTFE is not particularly limited, and a known method may be employed.

Specifically, the method for producing the modified PTFE preferably has a step of polymerizing TFE and PFBE to produce the modified PTFE.

The polymerization is preferably emulsion polymerization in view of handling efficiency of the modified PTFE. In such a case, it is preferred to subject TFE and PFBE to emulsion polymerization in an aqueous medium using a polymerization initiator in the presence of an emulsifier.

In the above step, usually TFE is used as the main component. The "main component" means that the amount of TFE used is, to the total mass of all monomers (the total mass of all the monomers used), 99.000 mass% or more, and preferably 99.400 mass% or more.

In the above step, the amount of PFBE used is, to the total mass of all monomers, preferably 1000 mass ppm or more, more preferably 1500 mass ppm or more, further preferably 1700 mass ppm or more, particularly preferably 2000 mass ppm or more. When the amount of PFBE used is 1000 mass ppm or more, more preferably 1500 mass ppm or more, the area ratio S can readily be adjusted to be within the above range.

The amount of the PFBE units used is, to the total mass of all monomers, preferably 6000 mass ppm or less, more preferably 5500 mass ppm or less, further preferably 5000 mass ppm or less. When the amount of PFBE used is 6000 mass ppm or less, it is possible to produce a modified PTFE which will favorably be stretched.

A monomer other than TFE and PFBE may be used within a range not to impair the effects of the present invention, however, with a view to achieving more excellent effects of the present invention, the total content of TFE and PFBE is, to the total mass of all monomers, preferably 99.000 mass% or more, more preferably 99.200 mass% or more, and it is further preferably that only TFE and PFBE are used.

The aqueous medium may be water or a mixture of water and a water-soluble organic solvent.

Specific examples of the water-soluble organic solvent include tert-butanol, propylene glycol, dipropylene glycol, dipropylene glycol monomethyl ether and tripropylene glycol.

In a case where the aqueous medium contains the water-soluble organic solvent, the content of the water-soluble organic solvent is, to 100 parts by mass of water, preferably 1 to 40 parts by mass, more preferably 3 to 30 parts by mass.

The emulsifier is preferably a fluorinated anionic surfactant with LogPOW of 2.4 to 3.4. LogPOW is the partition coefficient (1-octanol/water) as specified by OECD Guidelines for the Testing of Chemicals, Test Nos. 107 and 117 and JIS Z7260-107 (2000).

POW represents the ratio of the concentration of the surfactant in octanol to the concentration of the surfactant in water, resulting from phase separation of a mixture of octanol and water (1:1) each containing the surfactant to be measured. A surfactant with a high partition coefficient has high bioaccumulation property and a surfactant with a low partition coefficient has low bioaccumulation property. A surfactant with LogPOW of less than 3.5 is judged to have low bioaccumulation property.

Further, with a surfactant with LogPOW of 2.4 or higher, stability of the aqueous emulsion of the modified PTFE during the polymerization will favorably be maintained. LogPOW is preferably 2.4 to 3.3, more preferably 2.5 to 3.3, further preferably 2.5 to 3.2.

In the method for producing the modified PTFE, in view of bioaccumulation, it is preferred not to use an emulsifier with LogPOW of 3.5 or higher.

As a fluorinated anionic surfactant with LogPOW of 2.4 to 3.4, preferred is a fluorinated anionic surfactant having 6 or 7 carbon atoms, 0 or 1 hydrogen atom and 0 or 1 to 4 etheric oxygen atoms, having a group represented by the formula -COOA (wherein A is H, NH₄ or an alkali metal atom), and having fluorine atoms as the other atoms.

As a specific example of the fluorinated anionic surfactant with LogPOW of 2.4 to 3.4, preferred is at least one member selected from the group consisting of CF₃OCF(CF₃)CF₂OCF(CF₃)COOA, CF₃CF₂OCF₂CF₂OCF₂COOA, CF₃OCF₂CF₂CF₂OCHFCF₂COOA, C₃F₇OCF(CF₃)COOA, H(CF₂CF₂)₃COOA, CF₃CF₂(CF₂CF₂)₂COOA, CF₃(CF₂CF₂)₂COOA, and a compound represented by the following formula (1). A is H, NH₄ or an alkali metal atom (preferably Na or K).

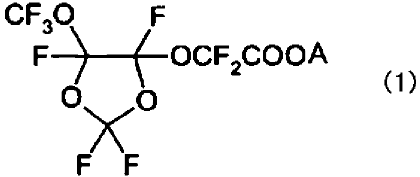

Among such fluorinated anionic surfactants, in view of excellent stability of the aqueous emulsion of the modified PTFE during the polymerization and low bioaccumulation property, preferred are CF₃CF₂OCF₂CF₂OCF₂COOA, CF₃OCF₂CF₂CF₂OCHFCF₂COOA and the compound represented by the formula (1), more preferred is CF₃CF₂OCF₂CF₂OCF₂COOA. Particularly, the fluorinated anionic surfactant wherein A is NH₄ is preferred.

The amount of the fluorinated anionic surfactant present (amount used) is, to the modified PTFE as a final product, preferably 0.10 to 2 mass%, more preferably 0.15 to 2 mass%, further preferably 0.20 to 2 mass%.

When the amount of the fluorinated anionic surfactant present is 2 mass% or less, the modified PTFE particles will hardly be formed into rods, and the aqueous emulsion tends to have favorable stability. When the amount of the fluorinated anionic surfactant present is 0.10 mas% or more, the aqueous emulsion tends to have favorable stability during the polymerization, and agglomeration of the modified PTFE particles and formation of rods tend to be suppressed.

The polymerization initiator is preferably a water-soluble radial initiator or a water-soluble redox initiator.

The water-soluble radical initiator is preferably a persulfate such as ammonium persulfate or potassium persulfate, or a water-soluble organic peroxide such as disuccinic peroxide, bisglutaric peroxide or tert-butyl hydroperoxide.

The water-soluble redox initiator is preferably a combination of an oxidizing agent such as bromic acid or its salt, chloric acid or its salt, persulfuric acid or its salt, permanganic acid or its salt, or hydrogen peroxide, with a reducing agent such as sulfurous acid or its salt, a hydrogensulfite, thiosulfuric acid or its salt, or an organic acid. Among them, more preferred is a combination of bromic acid or its salt with sulfurous acid or its salt, ammonium sulfite, or a combination of permanganic acid or its salt, potassium permanganate, with oxalic acid.

The polymerization initiator is preferably a mixture of a persulfate with disuccinic peroxide, more preferably a mixture of ammonium persulfate with disuccinic peroxide.

The polymerization initiator may be used alone or in combination of two or more.

The amount of the polymerization initiator used is, to the entire amount of **TFE** used for the polymerization, preferably 1 to 100 mass ppm, more preferably 3 to 80 mass ppm.

For the emulsion polymerization, it is preferred to use a stabilizing aid. The stabilizing aid is preferably one which has sufficient hydrophobicity and which can readily be separated and removed from the aqueous emulsion of the modified **PTFE** after the emulsion polymerization.

The stabilizing aid is preferably paraffin wax, a fluorinated oil, a fluorinated solvent or a silicone oil, more preferably paraffin wax. The stabilizing aid may be used alone or in combination of two or more.

The paraffin wax may be liquid, semi-solid or solid at room temperature, but is preferably a saturated hydrocarbon having 16 or more carbon atoms. The melting point of the paraffin wax is preferably 40 to 65°C, more preferably 50 to 65°C.

The amount of the stabilizing aid used is, to the aqueous medium used, preferably 0.1 to 12 mass%, more preferably 0.1 to 8 mass%. When it is the lower limit value of the above range or more, the aqueous emulsion of the modified PTFE during the polymerization tends to have favorable stability. When it is the upper limit value or less, the stabilizing aid will readily be separated and removed after the polymerization.

TFE is preferably supplied to a polymerization reactor continuously or intermittently so as to keep a predetermined polymerization pressure.

PFBE may be added to the polymerization reactor all at once or may be added dividedly, however, it is preferably added to the polymerization reactor all at once before TFE is supplied to the polymerization reactor.

In a case where the polymerization initiator is used, the polymerization initiator may be added to the polymerization reactor all at once or may be added dividedly.

In a case where the emulsifier is used, the emulsifier may be added to the polymerization reactor all at once or may be added dividedly, however, it is preferably added all at once, whereby the modified PTFE in the obtainable aqueous emulsion can readily be agglomerated.

As a preferred embodiment of the method for producing the modified PTFE of the present invention, embodiment A having Step 1 to Step 7 in this order may be mentioned.
(Step 1) a step of adding components other than monomers (the aqueous medium, the emulsifier, the stabilizing aid, the polymerization initiator, etc.) to the polymerization reactor.
(Step 2) a step of depressurizing the polymerization reactor and then adding the entire amount of PFBE to be used for the polymerization to the polymerization reactor.
(Step 3) a step of supplying TFE so that the pressure in the polymerization reactor reaches a predetermined value (for example 0.01 to 4.0 MPa) and then heating the polymerization reactor so that its internal temperature reaches a predetermined temperature (for example 10 to 95°C).
(Step 4) a step of supplying TFE so that the pressure in the polymerization reactor reaches a pressure higher than the pressure set in Step 3 (for example 0.1 to 4.1 MPa) and then continuously adding the polymerization initiator.
(Step 5) a step of restarting supply of TFE at a point when the pressure in the polymerization reactor decreases by 0.02 MPa and continuously supplying TFE so as to keep a predetermined pressure in the polymerization reactor (for example 0.5 to 4.0 MPa).
(Step 6) a step of terminating the addition of the polymerization initiator at a point when the total amount of TFE added reaches a predetermined amount (for example 10 to 90 mass% to the entire amount of TFE used for the polymerization).
(Step 7) a step of supplying TFE until its amount reaches a predetermined amount.

As another preferred embodiment, embodiment B having Step 1, (Step 2-2), (Step 3-2), (Step 4-2), (Step 5), (Step 6) and Step 7 in this order may be mentioned.
(Step 1) a step of adding components other than monomers (the aqueous medium, the emulsifier, the stabilizing aid, the polymerization initiator, etc.) to the polymerization reactor.
(Step 2-2) a step of depressurizing the polymerization reactor and then heating the polymerization reactor so that its internal temperature reaches a predetermined temperature (for example 10 to 95°C).
(Step 3-2) a step of adding the entire amount of PFBE to be used for the polymerization to the polymerization reactor.
(Step 4-2) a step of supplying TFE so that the pressure in the polymerization reactor reaches a predetermined pressure (for example 0.5 to 4.0 MPa) and then continuously adding the polymerization initiator.
(Step 5) a step of restarting supply of TFE at a point when the pressure in the polymerization reactor decreases by 0.02 MPa and continuously supplying TFE so as to keep a predetermined pressure in the polymerization reactor (for example 0.5 to 4.0 MPa).
(Step 6) a step of terminating the addition of the polymerization initiator at a point when the total amount of TFE added reaches a predetermined amount (for example 10 to 90 mass% to the entire amount of TFE used for the polymerization).
(Step 7) a step of supplying TFE until its amount reaches a predetermined amount.

It is considered that in the above Step 5, until the point when the pressure in the polymerization reactor decreases by 0.02 MPa, polymerization of PFBE and TFE proceeds. It is considered that in the above Step 5, at the point when the pressure in the polymerization reactor decreases by 0.02 MPa, almost the entire amount of PFBE is consumed. It is considered that immediately after almost the entire amount of PFBE is consumed, TFE starts being consumed.

In this specification, a time from the point when the supply of TFE to the polymerization reactor is started in the above Step 4 or Step 4-2, to the point when the pressure in the polymerization reactor decreases by 0.02 MPa in the above Step 5, will be referred to as "time for kick-off of the reaction".

The time for kick-off of the reaction is preferably 100 minutes or less, more preferably 80 minutes or less, further preferably 60 minutes or less. When the time for kick-off of the reaction is 100 minutes or less, TII will readily be set within the above range.

As a method of adjusting the time for kick-off of the reaction, adjustment such as adjustment of the polymerization temperature, adjustment of the polymerization pressure, adjustment of the rate of addition of the polymerization initiator or adjustment of the total amount of the polymerization initiator used may, for example, be mentioned.

In embodiment A and embodiment B, the polymerization time means a time from completion of the time for kick-off of the reaction (that is the point when the pressure in the polymerization reactor decreases by 0.02 MPa in Step 5) to the point when a predetermined amount of TFE is supplied in Step 7.

In embodiment A and embodiment B, the polymerization time is preferably 40 to 480 minutes, more preferably 60 to 420 minutes, further preferably 80 to 360 minutes.

By conducing Step 1 through Step 7 in embodiment A, an emulsion having the modified PTFE dispersed in the form of particles (an emulsion containing modified PTFE particles) can be obtained.

The concentration of the modified PTFE particles in the emulsion is preferably 10 to 45 mass%, more preferably 15 to 45 mass%, further preferably 15 to 43 mass%. Within the above range, the modified PTFE particles in the emulsion can more readily be coagulated and white turbidity of the coagulation liquid can be suppressed.

The preferred range of the average primary particle size of the modified PTFE particles is as described above.

### <Modified PTFE powder>

As a method of obtaining modified PTFE powder (modified PTFE fine powder) formed of the modified PTFE particles from the emulsion obtained by the emulsion polymerization, a known method may be employed.

For example, the emulsion containing the modified PTFE particles may be diluted with water so that the modified PTFE concentration is 8 to 25 mass% and the temperature of the emulsion is adjusted to be 5 to 35°C, then the emulsion is vigorously stirred for coagulation. On this occasion, the pH may be adjusted as the case requires. Further, a coagulation aid such as an electrolyte or a water-soluble organic solvent may be added to the emulsion.

Then, by appropriate stirring, the coagulated modified PTFE particles are separated from water, and the obtained wet powder (wet fine powder) is granulated and sized as the case requires and then dried as the case requires, whereby the modified PTFE powder can be obtained.

The above drying is conducted in a state where the wet powder is not so fluidized, preferably it is left at rest. The drying method may be vacuum drying, high frequency drying or hot air drying.

The drying temperature is preferably 10 to 300°C, more preferably 100 to 250°C.

### <Molded product>

The modified PTFE is suitably applicable to paste extrusion.

The modified PTFE (particularly the modified PTFE powder) is subjected to paste extrusion, whereby a desired molded product (molded article) is obtained.

Paste extrusion is a method of mixing the modified PTFE powder with a lubricant to make the modified PTFE powder have fluidity, and subjecting the powder to extrusion to form a molded product in the form of a film or a tube.

The blend ratio of the lubricant may properly be selected so that the modified PTFE powder has fluidity and for example preferably 10 to 30 mass%, more preferably 15 to 20 mass% based on the total amount of the modified PTFE powder and the lubricant being 100 mass%.

The lubricant is preferably for example naphtha or a petroleum hydrocarbon having a dry point of 100°C or higher.

To the mixture, an additive such as a pigment may be added for the purpose of coloring, or a filler may be added for the purpose of imparting strength, conductivity, etc.

The shape of the molded product may, for example, be a tube, a sheet, a film or a fiber. The application of the molded product may, for example, be a tube, an electric wire covering, a sealing material, a porous film or a filter.

Further, the modified PTFE powder may be subjected to paste extrusion to obtain an extruded bead, and the extruded bead is stretched to obtain a stretched porous body of the modified PTFE. As the stretching conditions, for example, a rate of 5 to 1000%/sec and a draw ratio of 500% or more may be mentioned.

The shape of an article constituted by the stretched porous body may, for example, be a tube, a sheet, a film or a fiber.

### EXAMPLES

Now, the present invention will be described in further detail with reference to Examples. Ex. 1 to 5 are Comparative Examples, and Ex. 6 to 14 are Examples of the present invention. However, it should be understood that the present invention is not limited to such specific Examples.

Various measurement methods and evaluation methods are as follows.

### (A) Average primary particle size (nm) (hereinafter sometimes referred to as "PPS") of modified PTFE particles

Measured by using an aqueous dispersion of modified PTFE particles as a sample, by means of a laser scattering particle size distribution analyzer (manufactured by HORIBA, Ltd., tradename: LA-960V2).

### (B) Standard specific gravity (hereinafter sometimes referred to as "SSG")

Measured in accordance with ASTM D4895-04.

12.0 g of a sample (modified PTFE powder) was weighed and compression-molded by a cylindrical mold having an inner diameter of 28.6 mm to obtain a pellet sample, which was put in an oven at 290°C and heated at 120 °C/hour. It was held at 380°C for 30 minutes and then its temperature was decreased at 60 °C/hour, and it was held at 294°C for 24 minutes. The sample was held in a desiccator at 23°C for 12 hours, and the specific gravity of the sample at 23°C relative to water was measured and taken as the standard specific gravity. A smaller SSG indicates a higher molecular weight.

### (C) Thermal instability index (hereinafter sometimes referred to as "TII")

Measured in accordance with ASTM D4895-04. A sample for the extended specific gravity (hereinafter sometimes referred to as "ESG") was prepared in the same manner as for the above SSG except that the sample was held at 380°C for 360 minutes, not 30 minutes.

TII was calculated as TII=(ESG-SSG)×1000.

A smaller TII indicates that the molecular weight would not change even when the sample was held at 380°C for a longer time. That is, a smaller TII indicates excellent heat resistance.

### (D) Extrusion pressure (hereinafter sometimes referred to as "EP")

The modified PTFE powder (100 g) which had been left to stand at room temperature for 2 hours or more, was put in a glass bottle having an internal capacity of 500 mL, and a lubricating oil (ISOPAR H (registered trademark), manufactured by ExxonMobil) (21.7g) was added and mixed for 3 minutes to obtain a mixture. The obtained mixture was left to stand in a 25°C constant temperature chamber for 2 hours and then subjected to paste extrusion through an orifice with a diameter of 2.5 cm, a land length of 1.1 cm and an entrance angle of 30° with a reduction ratio (ratio of the cross sectional area of the inlet of the die to the cross sectional area of the outlet) of 100, at an extrusion rate of 51 cm/min at 25°C to obtain an extruded bead (cord-shaped product). The pressure required for extrusion was measured and taken as the extrusion pressure (unit: MPa).

### (E) Breaking strength

### ·breaking strength A

An extruded bead was obtained in the same manner as the measurement of the extrusion pressure, which was dried at 230°C for 30 minutes to remove the lubricating oil. The extruded bead was cut into an appropriate length, both ends were fixed so that the distance between clamps would be 5.1 cm, and the extruded bead was heated in an air-circulating oven at 300°C. The extruded bead was stretched at a stretch rate of 100%/sec and a draw ratio of 2400% to obtain a modified PTFE stretched porous body A (hereinafter sometimes referred to as "stretched bead A").

Samples obtained from the both ends of the stretched bead A (necking in the clamp range was removed if any) and a sample obtained from the center part of the stretched bead, that is three samples, were used to measure the loads on tensile break using a tensile tester (manufactured by A&D Company, Limited), and the minimum value was taken as the breaking strength A.

In the measurement by the tensile tester, the sample was sandwiched and fixed by movable jaws with a gauge length of 5.0 cm, and the movable jaws were moved at a rate of 300 mm/min at room temperature (24°C) to impart a tensile stress.

### ·breaking strength B

An extruded bead was obtained in the same manner as the measurement of the extrusion pressure, which was dried at 230°C for 30 minutes to remove the lubricating oil. The extruded bead was cut into an appropriate length, both ends were fixed so that the distance between clamps would be 3.8 cm, and the extruded bead was heated in an air-circulating oven at 300°C. The extruded bead was stretched at a stretch rate of 1000%/sec and a draw ratio of 2400% to obtain a modified PTFE stretched porous body B (hereinafter sometimes referred to as "stretched bead B").

Samples obtained from the both ends of the stretched bead B (necking in the clamp range was removed if any) and a sample obtained from the center part of the stretched bead, that is three samples, were used to measure the loads on tensile break using a tensile tester (manufactured by A&D Company, Limited), and the minimum value was taken as the breaking strength B.

In the measurement by the tensile tester, the sample was sandwiched and fixed by movable jaws with a gauge length of 5.0 cm, and the movable jaws were moved at a rate of 300 mm/min at room temperature (24°C) to impart a tensile stress.

When the breaking strength A is 44.7 N or more and the breaking strength B is 47.5 N of more, it was judged that a stretched porous body excellent in breaking strength was obtained.

### (F) Area ratio S

Measured by using a differential scanning calorimeter (DSC 8500, manufactured by PerkinElmer) subjected to temperature calibration using indium and zinc as a standard sample.

A modified PTFE that had not been heated to a temperature of 300°C or higher, was normalized to a sample amount of 10 mg, and the sample was held at a temperature of -20°C for 1 minute and heated at a temperature-increasing rate of 1°C/min to 60°C to obtain a differential thermal analysis curve.

Second derivative of the obtained differential thermal analysis curve was taken to obtain a second derivative curve indicating the temperature on the horizontal axis and the endothermic amount per unit time on the vertical axis.

An area S1 of a region surrounded by a straight line connecting a point L21 indicating the local maximum value positioned on the lowest temperature side among local maximum values positioned on the higher temperature side than the temperature indicating the local minimum value Mi1, present in a range of 19 to 21°C in the obtained second derivative curve, and a point L22 indicating the local maximum value positioned on the highest temperature side among local maximum values positioned on the lower temperature side than the temperature indicating the local minimum value Mi1, and by the second derivative curve, was obtained.

An area S2 of a region surrounded by a straight line connecting a point L23 indicating the local maximum value positioned on the lowest temperature side among local maximum values positioned on the higher temperature side than the temperature indicating the local minimum value Mi2 present in a range of 15 to 17°C in the second derivative curve, and a point L24 indicating the local maximum value positioned on the highest temperature side among local maximum values positioned on the lower temperature side than the temperature indicating the local minimum value Mi2, and by the second derivative curve, was obtained.

And, the ratio of the area S1 to the area S2 (area S1/area S2) was taken as the area ratio S.

The second derivative curve of the differential thermal analysis curve, the area S1 and the area S2 were obtained by an analysis software (Pyris Software, manufactured by PerkinElmer).

### (G) Test on stability of aqueous emulsion (measurement of stability holding time)

Two baffles (baffle boards) having a thickness of 2.9 mm, a width of 2.5 cm and a length of 15 cm were welded to the inner wall of a cylindrical container made of SUS404, having an inner diameter of 12 cm, to be symmetrical with respect to the center axis of the cylindrical container. The distance from the bottom of the cylindrical container to the lower end of the baffle was 2.5 cm.

Further, an agitating blade having two paddle blades attached to a shaft with an inner diameter of 8.0 mm, was provided in the cylindrical container. Each paddle blade had a thickness of 1.2 mm, a width of 1.3 cm and a length of 9.7 cm, the inclination angle of the paddle blade was 30° to a plane perpendicular to the shaft axis direction, and the distance from the bottom of the cylindrical container to the lower end of the paddle blade was 5 mm.

800 g of an aqueous emulsion adjusted to a solid content concentration of 20 mass% was charged into the cylindrical container, and the temperature was adjusted to 23±1°C. The agitating blade was rotated at 500 rpm to stir the aqueous emulsion. The time from when stirring started to when the aqueous emulsion was destroyed and the modified **PTFE** particles in the aqueous emulsion were coagulated, was measured and taken as the stability holding time (unit: sec). The point when the modified **PTFE** particles were coagulated, was judged by a change of the stirring sound and by visual confirmation of the formation of a wet powder.

The solid content concentration of the aqueous emulsion was obtained as follows.

7 to 8 g of the modified PTFE aqueous emulsion was weighed on an aluminum plate the mass of which was preliminarily measured, and heated at 120°C for 2 hours to evaporate moisture. The mass of the solid content remaining on the aluminum plate, including the aluminum plate, was measured. The mass of the solid content was divided by the mass of the aqueous emulsion used to calculate the solid content concentration.

### (Ex. 1)

Assuming that the total amount of 22.5 kg of TFE added while keeping a predetermined polymerization pressure after the start of the polymerization reaction until the completion of the polymerization reaction, was the amount of the modified PTFE to be finally produced, the amount of PFBE to be added was set to 9 g, that is 400 ppm relative to the total amount of TFE added. The amount of the fluorinated anionic surfactant to be added was set to 243 g, that is about 1.32 mass% of the amount of the modified PTFE to be finally produced.

Into a 100 L stainless steel autoclave equipped with a baffle board and a stirrer, 50 g of C₂F₅OC₂F₄OCF₂COONH₄ (ammonium perfluoro-3,6-dioxaoctanoate, LogPOW=3.1, hereinafter sometimes referred to as "APFDO") as the fluorinated anionic surfactant, 846 g of paraffin wax as the stabilizing aid, 20.0 g of succinic acid, 0.299 g (0.56 mmol/L) of oxalic acid and 59.4 L of deionized water were charged (Step 1).

The interior of the autoclave was replaced with nitrogen, the autoclave was depressurized, and 9.0 g of PFBE was charged all at once (Step 2). Then, the autoclave was pressurized with TFE to about 0.1 MPa, and heated with stirring to 70°C (initial polymerization temperature) (Step 3).

Then, TFE was introduced to pressurize the autoclave to 1.618 MPaG, and at a point when the pressure of 1.618 MPaG was achieved, addition of TFE was terminated, and a 0.37g/L aqueous potassium permanganate solution was added continuously at 4 mL/minute (Step 4).

At a point when the pressure in the autoclave was decreased by 0.02 MPa, polymerization was made to proceed while adding TFE to keep the pressure in the autoclave of 1.618 MPaG (Step 5). A time from the point when the supply of TFE to the autoclave was started in the above Step 4 to the point when the pressure in the autoclave was decreased by 0.02 MPa in the above Step 5, was taken as the time for kick-off of the reaction, whereupon the time for kick-off of the reaction was 33.4 minutes.

At a point when the amount of TFE added after the start of the polymerization reached 9.0 kg, the addition of the aqueous potassium permanganate solution was terminated, and 193 g of APFDO was supplementarily added (Step 6). The total amount of potassium permanganate added was 96 mg.

After the addition of the aqueous potassium permanganate solution was terminated, the temperature was increased at a rate of 30°C/hour to 90°C (final polymerization temperature), and at a point when the amount of TFE added after the start of the polymerization reached 22.5 kg, the polymerization reaction was terminated and TFE in the autoclave was released to the air (Step 7). The point when the time for kick-off of the reaction was completed was determined as the polymerization reaction starting point (the point of start of the polymerization time), and the point when the amount of TFE added reached 22.5 kg was determined as the polymerization reaction end point (the point of end of the polymerization time). Then, the polymerization time was 153 minutes.

The obtained modified PTFE aqueous emulsion was cooled, and the supernatant paraffin wax was removed. The solid content concentration of the modified PTFE aqueous emulsion was 25.5 mass%. The yield of the modified PTFE was 20.9 kg. There were traces of coagulate in the autoclave.

Based on 20.9 kg of the obtained modified PTFE, the amount of PFBE added of 9.0 g corresponded to 430 mass ppm. Thus, the content ratio of the PFBE units was, to the total content of all monomer-based units in the obtained modified PTFE, 430 mass ppm.

Using the obtained modified PTFE aqueous emulsion, PPS and the stability holding time were measured by the above methods. The results are shown in Table 1.

The obtained modified PTFE aqueous emulsion was diluted with deionized water to a concentration of 10 mass% and adjusted to 20°C, and ammonium carbonate was added thereto, followed by stirring for coagulation to obtain a wet powder. The wet powder was dried in an aqueous ammonium carbonate solution atmosphere at 150°C for 14.5 hours to obtain a modified PTFE fine powder (modified PTFE powder).

SSG, TII, the extrusion pressure, the breaking strength A, the breaking strength B, and the area ratio S were measured by the above methods. The results are shown in Table 1.

### (Ex. 2)

A modified PTFE aqueous emulsion and a modified PTFE fine powder (modified PTFE powder) were obtained in the same manner as in Ex. 1 except that the amount of PFBE added was 22.5 g in Step 2, the total amount of potassium permanganate added was 135 mg, and the drying conditions at the time of production of the PTFE fine powder (modified PTFE powder) were 160°C for 10 hours.

The solid content concentration of the obtained modified PTFE aqueous emulsion was 24.9 mass%, and the yield of the modified PTFE was 20.4 kg.

Based on 20.4 kg of the obtained modified PTFE, the amount of 22.5 g of PFBE added corresponded to 1100 mass ppm. Thus, the content ratio of the PFBE units was, to the total content of all monomer-based units in the obtained modified PTFE, 1100 mass ppm.

Using the obtained modified PTFE aqueous emulsion and modified PTFE fine powder (modified PTFE powder), the above measurements were conducted. The results are shown in Table 1.

### (Ex. 3)

A modified PTFE aqueous emulsion and a modified PTFE fine powder (modified PTFE powder) were obtained in the same manner as in Ex. 2 except that the amount of PFBE added was 67.5 g in Step 2, the total amount of potassium permanganate added was 433 mg, and the pressure was 1.860 MPaG in Step 4.

The solid content concentration of the obtained modified PTFE aqueous emulsion was 22.9 mass%, and the yield of the modified PTFE was 18.5 kg.

Based on 18.5 kg of the obtained modified PTFE, the amount of 67.5 g of PFBE added corresponded to 3650 mass ppm. Thus, the content ratio of the PFBE units was, to the total content of all monomer-based units in the obtained modified PTFE, 3650 mass ppm.

Using the obtained modified PTFE aqueous emulsion and modified PTFE fine powder (modified PTFE powder), the above measurements were conducted. The results are shown in Table 1.

### (Ex. 4)

A modified PTFE aqueous emulsion and a modified PTFE fine powder (modified PTFE powder) were obtained in the same manner as in Ex. 3 except that the amount of PFBE added was 90.0 g in Step 2, the concentration of the aqueous potassium permanganate solution was 0.74 g/L in Step 4, the total amount of potassium permanganate added was 758 mg, and the heating temperature (initial polymerization temperature) was 80°C in Step 3.

The solid content concentration of the obtained modified PTFE aqueous emulsion was 23.1 mass%, and the yield of the modified PTFE was 18.6 kg.

Based on 18.6 kg of the obtained modified PTFE, the amount of 90.0 g of PFBE added corresponded to 4830 mass ppm. Thus, the content ratio of the PFBE units was, to the total content of all monomer-based units in the obtained modified PTFE, 4830 mass ppm.

Using the obtained modified PTFE aqueous emulsion and modified PTFE fine powder (modified PTFE powder), the above measurements were conducted. The results are shown in Table 1.

### (Ex. 5)

A modified PTFE aqueous emulsion and a modified PTFE fine powder (modified PTFE powder) were obtained in the same manner as in Ex. 4 except that the concentration of the aqueous potassium permanganate solution was 1.48 g/L in Step 4, and the total amount of potassium permanganate added was 790 mg.

The solid content concentration of the obtained modified PTFE aqueous emulsion was 18.7 mass%, and the yield of the modified PTFE was 14.2 kg.

Based on 14.2 kg of the obtained modified PTFE, the amount of 90.0 g of PFBE added corresponded to 6330 mass ppm. Thus, the content ratio of the PFBE units was, to the total content of all monomer-based units in the obtained modified PTFE, 6330 mass ppm.

Using the obtained modified PTFE aqueous emulsion and modified PTFE fine powder (modified PTFE powder), the above measurements were conducted. The results are shown in Table 1.

### (Ex. 6)

A modified PTFE aqueous emulsion and a modified PTFE fine powder (modified PTFE powder) were obtained in the same manner as in Ex. 5 except that the amount of PFBE added was 51.8 g in Step 2, the concentration of the aqueous potassium permanganate solution was 3.7 g/L in Step 4, and the total amount of potassium permanganate added was 481 mg.

The solid content concentration of the obtained modified PTFE aqueous emulsion was 22.9 mass%, and the yield of the modified PTFE was 18.2 kg.

Based on 18.2 kg of the obtained modified PTFE, the amount of 51.8 g of PFBE added corresponded to 2840 mass ppm. Thus, the content ratio of the PFBE units was, to the total content of all monomer-based units in the obtained modified PTFE, 2840 mass ppm.

Using the obtained modified PTFE aqueous emulsion and modified PTFE fine powder (modified PTFE powder), the above measurements were conducted. The results are shown in Table 1.

### (Ex. 7)

A modified PTFE aqueous emulsion and a modified PTFE fine powder (modified PTFE powder) were obtained in the same manner as in Ex. 6 except that the amount of PFBE added was 67.7 g in Step 2, and the total amount of potassium permanganate added was 651 mg.

The solid content concentration of the obtained modified PTFE aqueous emulsion was 22.3 mass%, and the yield of the modified PTFE was 17.6 kg.

Based on 17.6 kg of the obtained modified PTFE, the amount of 67.7 g of PFBE added corresponded to 3850 mass ppm. Thus, the content ratio of the PFBE units was, to the total content of all monomer-based units in the obtained modified PTFE, 3850 mass ppm.

Using the obtained modified PTFE aqueous emulsion and modified PTFE fine powder (modified PTFE powder), the above measurements were conducted. The results are shown in Table 1.

### (Ex. 8)

A modified PTFE aqueous emulsion and a modified PTFE fine powder (modified PTFE powder) were obtained in the same manner as in Ex. 7 except that the amount of PFBE added was 51.8 g in Step 2, the total amount of potassium permanganate added was 444 mg, and the drying conditions at the time of production of the PTFE fine powder (modified PTFE powder) were 205°C for 7.1 hours.

The solid content concentration of the obtained modified PTFE aqueous emulsion was 22.4 mass%, and the yield of the modified PTFE was 17.7 kg.

Based on 17.7 kg of the obtained modified PTFE, the amount of 51.8 g of PFBE added corresponded to 2930 mass ppm. Thus, the content ratio of the PFBE units was, to the total content of all monomer-based units in the obtained modified PTFE, 2930 mass ppm.

Using the obtained modified PTFE aqueous emulsion and modified PTFE fine powder (modified PTFE powder), the above measurements were conducted. The results are shown in Table 1.

### (Ex. 9)

A modified PTFE aqueous emulsion and a modified PTFE fine powder (modified PTFE powder) were obtained in the same manner as in Ex. 8 except that succinic acid was not used in Step 1, and the total amount of potassium permanganate added was 403 mg.

The solid content concentration of the obtained modified PTFE aqueous emulsion was 21.9 mass%, and the yield of the modified PTFE was 17.2 kg.

Based on 17.2 kg of the obtained modified PTFE, the amount of 51.8 g of PFBE added corresponded to 3020 mass ppm. Thus, the content ratio of the PFBE units was, to the total content of all monomer-based units in the obtained modified PTFE, 3020 mass ppm.

Using the obtained modified PTFE aqueous emulsion and modified PTFE fine powder (modified PTFE powder), the above measurements were conducted. The results are shown in Table 1.

### (Ex. 10)

A modified PTFE aqueous emulsion and a modified PTFE fine powder (modified PTFE powder) were obtained in the same manner as in Ex. 9 except that APFDO was not supplementarily added in Step 6, and the total amount of potassium permanganate added was 396 mg.

The solid content concentration of the obtained modified PTFE aqueous emulsion was 21.7 mass%, and the yield of the modified PTFE was 17.1 kg.

Based on 17.1 kg of the obtained modified PTFE, the amount of 51.8 g of PFBE added corresponded to 3040 mass ppm. Thus, the content ratio of the PFBE units was, to the total content of all monomer-based units in the obtained modified PTFE, 3040 mass ppm.

Using the obtained modified PTFE aqueous emulsion and modified PTFE fine powder (modified PTFE powder), the above measurements were conducted. The results are shown in Table 1.

In Table 1, "Rate of addition of potassium permanganate per TFE mass" means the ratio (unit: mg/g/min) of the rate of addition of potassium permanganate (1.48 mg/min in the case of Ex. 1) to the amount of TFE added at the point up to Step 6 (9.0 kg=9000 g in the case of Ex. 1).

**Table 1**

| | | | Ex.1 | Ex.2 | Ex.3 | Ex.4 | Ex.5 |
|---|---|---|---|---|---|---|---|
| Production conditions | Amount of PFBE added | (mass ppm) | 430 | 1100 | 3650 | 4830 | 6330 |
| | Time for kick-off of the reaction | (min) | 33.4 | 60.6 | 315.1 | 265.7 | 137.6 |
| | Initial polymerization temperature | (°C) | 70 | 70 | 70 | 80 | 80 |
| | Final polymerization temperature | (°C) | 90 | 90 | 90 | 90 | 90 |
| | Rate of addition of potassium permanganate per TFE mass | (mg/g/min) | 0.000164 | 0.000164 | 0.000164 | 0.000329 | 0.000658 |
| | Total amount of potassium permanganate added | (mg) | 96 | 135 | 433 | 758 | 790 |
| | Polymerization time | (min) | 153.1 | 148.6 | 199.9 | 249.1 | 108.6 |
| Measurement results | PPS (average primary particle size) | (µm) | 0.171 | 0.156 | 0.151 | 0.147 | 0.127 |
| | Stability holding time | (sec) | 917 | 1845 | 1601 | 1288 | Not coagulated |
| | TII (thermal instability index) | - | 7 | 10 | 16 | 18 | 20 |
| | SSG (standard specific gravity) | - | 2.136 | 2.136 | 2.139 | 2.140 | 2.142 |
| | EP (extrusion pressure) | (Mpa) | 18.2 | 19.1 | 20.6 | 21.4 | 23.2 |
| | Breaking strength A | (N) | 36.6 | 37.3 | 42.6 | 44.6 | Broken |
| | Breaking strength B | (N) | 42.1 | 43.2 | 47.4 | 47.2 | 46.5 |
| | Area ratio S | - | 1.276 | 0.738 | 0.224 | 0.019 | 0.002 |

**Table 1 (continued)**

| | | | Ex.6 | Ex.7 | Ex.8 | Ex.9 | Ex.10 |
|---|---|---|---|---|---|---|---|
| Production conditions | Amount of PFBE added | (mass ppm) | 2840 | 3850 | 2930 | 3020 | 3040 |
| | Time for kick-off of the reaction | (min) | 26.0 | 36.3 | 21.2 | 22.8 | 22.0 |
| | Initial polymerization temperature | (°C) | 80 | 80 | 80 | 80 | 80 |
| | Final polymerization temperature | (°C) | 90 | 90 | 90 | 90 | 90 |
| | Rate of addition of potassium permanganate per TFE mass | (mg/g/min) | 0.00164 | 0.00164 | 0.00164 | 0.00164 | 0.00164 |
| | Total amount of potassium permanganate added | (mg) | 481 | 651 | 444 | 403 | 396 |
| | Polymerization time | (min) | 114.4 | 106.1 | 116.8 | 101.5 | 85.4 |
| Measurement results | PPS (average primary particle size) | (µm) | 0.130 | 0.130 | 0.136 | 0.134 | 0.134 |
| | Stability holding time | (sec) | 1962 | 1955 | 2725 | 2011 | 138 |
| | TII (thermal instability index) | - | 11 | 10 | 11 | 11 | 11 |
| | SSG (standard specific gravity) | - | 2.136 | 2.137 | 2.139 | 2.138 | 2.136 |
| | EP (extrusion pressure) | (Mpa) | 21.0 | 21.0 | 25.1 | 25.5 | 21.4 |
| | Breaking strength A | (N) | 47.3 | 44.8 | 60.3 | 65.7 | 61.1 |
| | Breaking strength B | (N) | 51.3 | 49.6 | 62.0 | 64.0 | 62.2 |
| | Area ratio S | - | 0.150 | 0.008 | 0.220 | 0.192 | 0.009 |

### (Ex. 11)

Assuming that the total amount of 20.45 kg of TFE added while keeping a predetermined polymerization pressure after the start of the polymerization reaction until the completion of the polymerization reaction, was the amount of the modified PTFE to be finally produced, the amount of PFBE to be added was set to 40.90 g, that is 2000 ppm relative to the total amount of TFE added.

Into a 100 L stainless steel autoclave equipped with a baffle board and a stirrer, 50.23 g of C₂F₅OC₂F₄OCF₂COONH₄ (ammonium perfluoro-3,6-dioxaoctanoate, LogPOW=3.1, hereinafter referred to as "APFDO") as the fluorinated anionic surfactant, 846 g of paraffin wax as the stabilizing aid, 20.0 g of succinic acid, 2.99 g (5.60 mmol/L) of oxalic acid and 59.4 L of deionized water were charged (Step 1).

The interior of the autoclave was replaced with nitrogen, and the autoclave was depressurized and heated with stirring to 65°C (initial polymerization temperature) (Step 2-2). Then, the entire amount of PFBE to be used for the polymerization was added to the polymerization reactor (step 3-2), and then TFE was introduced to pressurize the autoclave to 1.660 MPaG, and at a point when the pressure of 1.660 MPaG was achieved, addition of TFE was terminated, and a 0.8 g/L aqueous potassium permanganate solution was added continuously at 10.5 mL/min (Step 4-2).

At a point when the pressure in the autoclave was decreased by 0.02 MPa, polymerization was made to proceed while adding TFE to keep the pressure in the autoclave of 1.660 MPaG (Step 5). A time from the point when the supply of TFE to the autoclave was started in the above Step 4 to the point when the pressure in the autoclave was decreased by 0.02 MPa in the above Step 5, was taken as the time for kick-off of the reaction, whereupon the time for kick-off of the reaction was 26.1 minutes.

At a point when the amount of TFE added after the start of the polymerization reached 9.95 kg, the addition of the aqueous potassium permanganate solution was terminated (Step 6). The total amount of potassium permanganate added was 398 mg.

After the addition of the aqueous potassium permanganate solution was terminated, the temperature was increased at a rate of 30°C/hour to 90°C (final polymerization temperature), and at a point when the amount of TFE added after the start of the polymerization reached 20.50 kg, the polymerization reaction was terminated and TFE in the autoclave was released to the air (Step 7). The point when the time for kick-off of the reaction was completed was determined as the polymerization reaction starting point (the point of start of the polymerization time), and the point when the amount of TFE added reached 20.50 kg was determined as the polymerization reaction end point (the point of end of the polymerization time). Then, the polymerization time was 121 minutes.

The obtained modified PTFE aqueous emulsion was cooled, and the supernatant paraffin wax was removed. The solid content concentration of the modified PTFE aqueous emulsion was 24.0 mass%. The yield of the modified PTFE was 20.4 kg. There were traces of coagulate in the autoclave.

Based on 20.4 kg of the obtained modified PTFE, the amount of 40.90 g of PFBE added corresponded to 2811 mass ppm. Thus, the content ratio of the PFBE units was, to the total content of all monomer-based units in the obtained modified PTFE, 2811 mass ppm.

Using the obtained modified PTFE aqueous emulsion, PPS and the stability holding time were measured by the above methods. The results are shown in Table 2.

The obtained modified PTFE aqueous emulsion was diluted with deionized water to a concentration of 10 mass% and adjusted to 13°C, followed by stirring for coagulation to obtain a wet powder. The wet powder was dried in an aqueous ammonium carbonate solution atmosphere at 205°C for 7.1 hours to obtain a modified PTFE fine powder (modified PTFE powder).

SSG, TII, the extrusion pressure, the breaking strength A, the breaking strength B, and the area ratio S were measured by the above methods. The results are shown in Table 2.

### (Ex. 12)

A modified PTFE aqueous emulsion and a modified PTFE fine powder (modified PTFE powder) were obtained in the same manner as in Ex. 1 except that the amount of PFBE added was 30.68 g in Step 2, and the total amount of potassium permanganate added was 274 mg.

The solid content concentration of the obtained modified PTFE aqueous emulsion was 24.3 mass%, and the yield of the modified PTFE was 19.8 kg.

Based on 19.8 kg of the obtained modified PTFE, the amount of 30.68 g of PFBE added corresponded to 1552 mass ppm. Thus, the content ratio of the PFBE units was, to the total content of all monomer-based units in the obtained modified PTFE, 1552 mass ppm.

Using the obtained modified PTFE aqueous emulsion and modified PTFE fine powder (modified PTFE powder), the above measurements were conducted. The results are shown in Table 2.

### (Ex. 13)

A modified PTFE aqueous emulsion and a modified PTFE fine powder (modified PTFE powder) were obtained in the same manner as in Ex. 1 except that the amount of PFBE added was 20.45 g in Step 2, and the total amount of potassium permanganate added was 149.6 mg.

The solid content concentration of the obtained modified PTFE aqueous emulsion was 24.1 mass%, and the yield of the modified PTFE was 19.58 kg.

Based on 19.58 kg of the obtained modified PTFE, the amount of 20.45 g of PFBE added corresponded to 1044 mass ppm. Thus, the content ratio of the PFBE units was, to the total content of all monomer-based units in the obtained modified PTFE, 1044 mass ppm.

Using the obtained modified PTFE aqueous emulsion and modified PTFE fine powder (modified PTFE powder), the above measurements were conducted. The results are shown in Table 2.

### (Ex. 14)

A modified PTFE aqueous emulsion and a modified PTFE fine powder (modified PTFE powder) were obtained in the same manner as in Ex. 1 except that the amount of PFBE added was 25.56 g in Step 2, and the total amount of potassium permanganate added was 163.2 mg.

The solid content concentration of the obtained modified PTFE aqueous emulsion was 24.0 mass%, and the yield of the modified PTFE was 19.47 kg.

Based on 19.47 kg of the obtained modified PTFE, the amount of 20.45 g of PFBE added corresponded to 1313 mass ppm. Thus, the content ratio of the PFBE units was, to the total content of all monomer-based units in the obtained modified PTFE, 1313 mass ppm.

Using the obtained modified PTFE aqueous emulsion and modified PTFE fine powder (modified PTFE powder), the above measurements were conducted. The results are shown in Table 2.

**Table 2**

| | | | Ex.11 | Ex.12 | Ex.13 | Ex.14 |
|---|---|---|---|---|---|---|
| Production conditions | Amount of PFBE added | (mass ppm) | 2040 | 1550 | 1040 | 1310 |
| | Time for kick-off of the reaction | (min) | 26.1 | 15.4 | 7.9 | 8.8 |
| | Initial polymerization temperature | (°C) | 65 | 65 | 65 | 65 |
| | Final polymerization temperature | (°C) | 90 | 90 | 90 | 90 |
| | Rate of addition of potassium permanganate per TFE mass | (mg/g/min) | 0.000844 | 0.000844 | 0.000844 | 0.000844 |
| | Total amount of potassium permanganate added | (mg) | 398 | 274 | 150 | 163 |
| | Polymerization time | (min) | 120.7 | 114.8 | 116.4 | 119.4 |
| Measurement results | PPS (average primary particle size) | (µm) | 0.140 | 0.140 | 0.144 | 0.143 |
| | Stability holding time | (sec) | 116 | 146 | 150 | 151 |
| | TII (thermal instability index) | - | 12 | 10 | 7 | 9 |
| | SSG (standard specific gravity) | - | 2.1365 | 2.1356 | 2.1355 | 2.1360 |
| | EP (extrusion pressure) | (Mpa) | 21.2 | 20.8 | 20.7 | 20.0 |
| | Breaking strength A | (N) | 48.8 | 48.9 | 49.8 | 48.7 |
| | Breaking strength B | (N) | 54.4 | 55.5 | 50.9 | 51.8 |
| | Area ratio S | - | 0.280 | 0.596 | 0.642 | 0.546 |

As evident from Tables 1 and 2, it was confirmed that with a modified PTFE having TFE units and PFBE units, with a thermal instability index (TII) of 0 to 15 and an area ratio S of 0.70 or less, a stretched porous body excellent in breaking strength can be produced (Ex. 6 to 14).

The entire disclosure of Japanese Patent Application No. 2022-114814 filed on July 19, 2022 including specification, claims, drawings and summary is incorporated herein by reference in its entirety.

### REFERENCE SYMBOLS

Mi1, Mi2: local minimum value
L21, L22, L23, L24: point
S1, S2: area

## Claims

1. A modified polytetrafluoroethylene having units based on tetrafluoroethylene and units based on the following another monomer copolymerizable with tetrafluoroethylene,
wherein a thermal instability index is 0 to 15, and
an area ratio S calculated by the following method is 0.70 or less;
another monomer: at least one member selected from a perfluoro(alkyl vinyl ether), hexafluoropropylene and a fluoroalkylethylene;
area ratio S calculation method:
second derivative is taken of a differential thermal analysis curve measured with respect to the modified polytetrafluoroethylene that has not been heated to 300°C or higher, by a differential scanning calorimeter at a temperature-increasing rate of 1°C/min, to obtain a second derivative curve;
in the second derivative curve, a local minimum value Mi1 is present in a range of 19 to 21°C, and, an area S1 of a region surrounded by a straight line connecting a point L21 indicating a local maximum value positioned on the lowest temperature side among local maximum values positioned on the higher temperature side than a temperature indicating the local minimum value Mi1, and a point L22 indicating a local maximum value positioned on the highest temperature side among local maximum values positioned on the lower temperature side than the temperature indicating the local minimum value Mi1, and by the second derivative curve, is obtained,
in the second derivative curve, a local minimum value Mi2 is present in a range of 15 to 17°C, and, an area S2 of a region surrounded by a straight line connecting a point L23 indicating a local maximum value positioned on the lowest temperature side among local maximum values positioned on the higher temperature side than a temperature indicating the local minimum value Mi2, and a point L24 indicating a local maximum value positioned on the highest temperature side among local maximum values positioned on the lower temperature side than the temperature indicating the local minimum value Mi2, and by the second derivative curve, is obtained, and
a ratio of the area S1 to the area S2 is taken as the area ratio S.

2. The modified polytetrafluoroethylene according to Claim 1, wherein the another monomer is a fluoroalkylethylene.

3. The modified polytetrafluoroethylene according to Claim 1, wherein the another monomer is CH₂=CH(CF₂)₄F.

4. The modified polytetrafluoroethylene according to Claim 1, wherein a standard specific gravity of the modified polytetrafluoroethylene is 2.130 to 2.160.

5. The modified polytetrafluoroethylene according to Claim 1, wherein a content ratio of the units based on the another monomer in the modified polytetrafluoroethylene is 1000 to 6000 mass ppm to a total content of all monomer-based units in the modified polytetrafluoroethylene.

6. The modified polytetrafluoroethylene according to Claim 3, wherein a content ratio of the units based on CH₂=CH(CF₂)₄F in the modified polytetrafluoroethylene is 1500 to 6000 mass ppm to a total content of all monomer-based units in the modified polytetrafluoroethylene.

7. The modified polytetrafluoroethylene according to Claim 1, which is for paste extrusion.

8. A molded product, formed by subjecting the modified polytetrafluoroethylene as defined in any one of Claims 1 to 7 to paste extrusion.

9. A method for producing an extrude porous body, which comprises subjecting the modified polytetrafluoroethylene as defined in any one of Claims 1 to 7 to paste extrusion to obtain an extruded bead, and stretching the extruded bead to obtain a stretched porous body.
